# EUROPÄISCHE PATENTANMELDUNG

(11) **EP 4 641 333 A1**
(43) Veröffentlichungstag der Anmeldung: **29.10.2025**
(21) Anmeldenummer: 24172793.2
(22) Anmeldetag: 26.04.2024
(51) Int. Cl.: G05B 23/02, G05B 19/042

(54) **ZUVERLÄSSIGKEITSINDIKATOREN FÜR OPERATOR STATION SERVER**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Die Erfindung betrifft einen Operator Station Server (OS 1.1, OS 1.2) für ein Leitsystem (1) einer technischen Anlage, insbesondere Fertigungs- oder Prozessanlage, der für eine Bedienung und Beobachtung der technischen Anlage ausgebildet ist, auf dem wenigstens eine Software-Komponente implementiert ist, wobei die wenigstens eine Software-Komponente dazu ausgebildet ist, für eine Zeitdauer eines in der Software-Komponente auftretenden Fehlers einen Alarm mit einem bestimmten Schweregrad zu erzeugen,

Der Operator Station Server (OS 1.1, OS 1.2) ist dadurch gekennzeichnet, dass er dazu ausgebildet ist, in Bezug auf sich selbst einen Gesundheitsindex zu berechnen, der von der Zeitdauer und dem Schweregrad des erzeugten Alarms abhängt, und diesen Gesundheitsindex an mit dem Operator Station Server (OS 1.1, OS 1.2) in Verbindung stehende Komponenten des Leitsystems (1) zu übermitteln.

## Beschreibung

Die Erfindung betrifft einen Operator Station Server für ein Leitsystem einer technischen Anlage, insbesondere Fertigungs- oder Prozessanlage, der für eine Bedienung und Beobachtung der technischen Anlage ausgebildet ist, auf dem wenigstens eine Software-Komponente implementiert ist, wobei die wenigstens eine Software-Komponente dazu ausgebildet ist, für eine Zeitdauer eines in der Software-Komponente auftretenden Fehlers einen Alarm mit einem bestimmten Schweregrad zu erzeugen. Außerdem betrifft die Erfindung ein Leitsystem für eine technische Anlage, insbesondere Fertigungs- oder Prozessanlage. Zudem betrifft die Erfindung ein Verfahren zum Betrieb einer technischen Anlage, insbesondere Fertigungs- oder Prozessanlage.

Für die Bedienung und Beobachtung verfahrenstechnischer Anlagen werden symbolische Anlagenbilder erstellt, die die verfah-renstechnischen Zusammenhänge - insbesondere zwischen einzelnen Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexen Controls (z.B. Trendanzeigen, Meldefolgeanzeigen, usw.) und Containern, um Inhalte aus unabhängigen und eigenständige Quellen visualisieren zu können (z.B. Webcams, Anlagenbilder modulare Anlagenteile, oder Applikationen wie ein Regleroptimierer oder KPI-Berechnungen), zusammen.

Anlagenbilder werden in Operator Station Clients visualisiert und wie die für die Dynamisierung notwendigen Prozesswerte und Prozessalarme über deren Prozessabbilder durch Operator Station Server bereitgestellt. Für eine bessere Verfügbarkeit und Skalierung werden Operator Station Server oftmals nicht nur redundant, sondern auch im Verbund arbeitend verteilt konfiguriert. Bei redundanten Operator Station Servern findet die Bedienung und Beobachtung auf dem aktiven Operator Station Server statt, wohingegen der passive Operator Station Server sich im "Hot-Standby" befindet, um bei einer funktionalen Einschränkung (Verbindungsverlust zur Automatisierung, Absturz einer Software-Komponente...) des aktiven Operator Station Servers einspringen zu können, in dem er selbst aktiv wird.

Bei redundanten Operator Station Servern ist der Operator Station Client stets immer mit dem aktiven Operator Station Server verbunden. Wird durch einen erkannten Fehler eine Redundanzumschaltung eingeleitet (der aktive Operator Station Server wird passiv und umgekehrt), so verbindet sich der Operator Station Client mit dem nun aktiv gewordenen Operator Station Server. Für den Zeitraum der Umschaltung ist keine Bedienung und Beobachtung möglich, weshalb dieser Zeitraum möglichst kurz sein muss und darüber hinaus unnötige Umschaltungen des Operator Station Clients zu vermeiden sind.

Ein Operator Station Server umfasst zahlreiche modulare Software-Komponenten, wie beispielsweise das Prozessabbild, der Visualisierungsdienst, der Archivierungsdienst, unterschiedliche Treiber für die Kommunikation zwischen den Operator Station Servern und der Automatisierungsebene, der Alarmdienst und weitere. Diese Funktionalitäten sind für eine Bedienung und Beobachtung mittels eines Operator Station Clients vorgesehen.

Für einen Operator Station Server kann nach dem Stand der Technik ein Gesundheitsindex (engl. Health Index) berechnet werden. Eine Berechnungsgrundlage können von den einzelnen Software-Komponenten des Operator Station Server gemeldeten Alarme mit ihrem jeweiligen Schweregrad (Severity) sein. Der Gesundheitsindex kann für mehrere Anwendungsfälle benutzt werden:
- Bei redundanten Operator Station Servern kann der Operator Station Server mit dem besten Gesundheitsindex aktiv sein. Sind beide Gesundheitsindizes gleich (entweder weil in beiden Operator Station Server keine aktiven Alarme vorliegen oder es liegen auf beiden Operator Station Server Alarme mit demselben Schweregrad vor) entscheidet letztendlich der Zufall, welcher Operator Station Server aktiv und welcher passiv wird.
- Operator Station Clients nutzten den Gesundheitsindex der unterschiedlichen Operator Station Servern in verteilten Systemen, um sich bei zur Verfügung stehenden Alternativen mit demjenigen Operator Station Server zu verbinden, der den besten Gesundheitsindex aufweist.
- Diagnose von Operator Station Servern in Hinblick auf notwendige Wartungen und Betriebsbereitschaft

Da der Gesundheitsindex ein Aktualwert ist, können nicht alle Anwendungsfälle ausreichend adressiert werden. Hat beispielsweise ein Operator Station Server ein sporadisch wiederkehrendes Problem oder ist er generell häufiger von Ausfällen betroffen, führt der Gesundheitsindex nach dem Stand der Technik dazu, dass es häufiger zu Redundanzumschaltungen zwischen Operator Station Serverpaaren oder zu Neuanmeldungen von Operator Station Clients auf anderen Operator Station Servern kommt, was in beiden Fällen zu Unterbrechungen in der Bedienung und Beobachtung führt.

Werden zudem Diagnosen oder Wartungen lediglich auf Grundlage eines Gesundheitsindex nach dem Stand der Technik durchgeführt, so können unter Umständen Ursachen für sporadisch auftretende Fehler weder erkannt noch behoben werden, so dass diese zu schwerwiegenden Ausfällen in der Bedienung und Beobachtung führen können.

Aus der EP 3 276 437 A1 ist ein Automatisierungssystem bekannt, bei dem ein Gesundheitsindex eines Operator Station Servers ermittelt und für eine Kommunikation innerhalb des Automatisierungssystems bewertet wird.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch einen Operator Station Server mit den Merkmalen des Anspruchs 1. Außerdem wird die Aufgabe gelöst durch ein Leitsystem gemäß Anspruch 6 und durch ein Verfahren zum Betrieb einer technischen Anlage gemäß Anspruch 9. Vorteilhafte Weiterbildungen ergeben sich aus den abhängigen Ansprüchen.

Der erfindungsgemäße Operator Station Server für ein Leitsystem einer technischen Anlage, insbesondere Fertigungs- oder Prozessanlage, der für eine Bedienung und Beobachtung der technischen Anlage ausgebildet ist, auf dem wenigstens eine Software-Komponente implementiert ist, wobei die wenigstens eine Software-Komponente dazu ausgebildet ist, für eine Zeitdauer eines in der Software-Komponente auftretenden Fehlers einen Alarm mit einem bestimmten Schweregrad zu erzeugen, ist dadurch gekennzeichnet, dass er dazu ausgebildet ist, in Bezug auf sich selbst einen Gesundheitsindex zu berechnen, der von der Zeitdauer und dem Schweregrad des erzeugten Alarms abhängt, und diesen Gesundheitsindex an mit dem Operator Station Server in Verbindung stehende Komponenten des Leitsystems zu übermitteln.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Kompo-nenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Da-tenspeicherung und - verarbeitung umfassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Es wird davon ausgegangen, dass der Operator Station Server wenigstens eine Software-Komponente umfasst, die für eine Zeitdauer eines in der Software-Komponente auftretenden Fehlers einen Alarm mit einem bestimmten Schweregrad erzeugen kann. Eine solche Software-Komponente kann beispielsweise ein Prozessabbilddienst, ein Visualisierungsdeinst, ein Archivdienst oder ein Kommunikationsdienst sein, die auf dem Operator Station Server implementiert sind und verschiedene Funktionalitäten im Rahmen der Bedienung und Beobachtung der technischen Anlage bereitstellen.

Ein Fehler wird vorliegend allgemein als eine Abweichung eines Ist-Zustandes der Software-Komponente von einem Soll-Zustand der Software-Komponente verstanden.

Der von der Software-Komponente erzeugte Alarm wird über eine bestimmte Zeitdauer hinweg ausgegeben und weist einen bestimmten Schweregrad auf. Dadurch informiert der Alarm über das Vorliegen des Fehlers, über die Zeitdauer des Auftretens des Fehlers und über den Schweregrad des Fehlers..

In einer besonders erfinderischen Weiterbildung des Standes der Technik ist der Operator Station Server dazu ausgebildet, in Bezug auf sich selbst einen Gesundheitsindex zu berechnen, der von der Zeitdauer und dem Schweregrad des erzeugten Alarms abhängt. Mit anderen Worten wird zusätzlich zu dem Schweregrad des erzeugten Alarms (welcher den Schweregrad des Fehlers widerspiegelt) die Zeitdauer berücksichtigt, während der der Alarm (und damit der zugrundeliegende Fehler) auftritt. Dadurch wird ein aussagekräftigerer Gesundheitsindex ermittelt und für eine weitere Verwertung zur Verfügung gestellt als bei bislang bekannten Operator Station Servern.

Bevorzugt ist auf dem Operator Station Server wenigstens eine weitere Software-Komponente implementiert, wobei die wenigstens eine weitere Software-Komponente dazu ausgebildet ist, für eine Zeitdauer eines in der wenigstens einen weiteren Software-Komponente auftretenden Fehlers einen Alarm mit einem bestimmten Schweregrad zu erzeugen, wobei der Operator Station Server dazu ausgebildet ist, in Bezug auf sich selbst einen Gesundheitsindex zu berechnen, der von der Zeitdauer und dem Schweregrad der durch die Software-Komponente und die wenigstens eine weitere Software-Komponente erzeugten Alarme abhängt, und wobei der Operator Station Server dazu ausgebildet ist, diesen Gesundheitsindex an mit dem Operator Station Server in Verbindung stehende Komponenten des Leitsystems zu übermitteln. Der Gesundheitsindex berücksichtigt demnach nicht nur eine einzige Software-Komponente, sondern vielmehr eine Mehrzahl von Software-Komponenten. Dabei ist der Operator Station Server besonders bevorzugt dazu ausgebildet, die einzelnen Schweregrade der Vielzahl von Alarmen zu summieren, um hieraus den Gesundheitsindex aussagekräftig zu bestimmen.

Im Rahmen einer bevorzugten Weiterbildung der Erfindung ist der Operator Station Server dazu ausgebildet, den von der Software-Komponente erzeugten Alarm oder die von den Software-Komponenten erzeugten Alarme jeweils nur für eine bestimmte Zeitspanne für die Berechnung des Gesundheitsindex zu berücksichtigen. Die Zeitspanne stellt dabei eine Art Beobachtungszeitraum dar, während dem sich der Operator Station Server "bewähren" muss, bevor die zuvor gemeldeten Alarme nicht mehr berücksichtigt werden. Die bestimmte Zeitspanne beträgt eine Stunde, 12 Stunden oder 24 Stunden.

Die zuvor formulierte Aufgabe wird zudem gelöst durch ein Leitsystem für eine technische Anlage, insbesondere Fertigungs- oder Prozessanlage, welches einen ersten Operator Station Server aufweist, der wie zuvor erläutert ausgebildet ist.

Das Leitsystem kann dabei einen zweiten Operator Station Server aufweisen, der ebenfalls wie zuvor erläutert ausgebildet ist.

Bevorzugt sind die beiden Operator Station Server auf redundante Art und Weise für die Bedienung und Beobachtung der technischen Anlage ausgebildet, wobei die beiden Operator Station Server dazu ausgebildet sind, durch wiederholte Vergleiche ihres jeweiligen Gesundheitsindex festzulegen, welcher Operator Station Server aktiv und welcher Operator Station Server passiv sein soll. Bei der Aushandlung der aktiven und der passiven Rolle werden die beiden Gesundheitsindizes miteinander vergleichen. Mit dem erfindungsgemäßen Leitsystem kann nun in die Entscheidung zusätzlich einfließen, welcher Operator Station Server das höchste Maß an Zuverlässigkeit innerhalb der Zeitspanne aufweist, um unnötigen Redundanzumschalten vorzubeugen. Verlieren die Operator Station Server zeitweise ihre Verbindung zueinander nehmen beide eine aktive Rolle ein, bis sie wieder eine Verbindung zueinander aufbauen können. Auch hier kann der Gesundheitsindex vorteilhafterweise genutzt werden, um nach bei der Zusammenführung die aktive Rolle dem Operator Station Server zuweisen zu können, der die beste Zuverlässigkeit rückblickend vorzuweisen hat, um zukünftigen Redundanzumschaltungen vorbeugen zu können.

Die zuvor formulierte Aufgabe wird zudem gelöst durch ein Verfahren zum Betrieb einer technischen Anlage, insbesondere Fertigungs- oder Prozessanlage, mit einem Leitsystem, das wie zuvor erläutert ausgebildet ist.

Die zuvor formulierte Aufgabe wird zudem gelöst durch ein Verfahren zum Betrieb einer technischen Anlage, insbesondere Fertigungs- oder Prozessanlage, mit einem Leitsystem, das wie zuvor erläutert ausgebildet ist, bei dem ein Operator Station Client, der sich an einem der beiden Operator Station Server anmelden möchte, von beiden Operator Station Servern den jeweiligen Gesundheitsindex abfragt und auf Basis eines Vergleichs der beiden Gesundheitsindex einen der beiden Operator Station Server für die Anmeldung auswählt. Stehen mehrere Operator Station Server zur Verfügung, kann der Operator Station Client auch rückblickend bewerten, welcher der verfügbaren Operator Station Server das höchste Maß an Zuverlässigkeit innerhalb der Zeitspanne aufweist. Hierdurch kann vermieden werden, dass sich der Operator Station Client an Operator Station Servern anmeldet, auf denen vereinzelt immer wieder Fehler auftreten. Dadurch können unnötige Operator Station Client Umschaltungen vermieden werden. Trifft ein Operator Station Client auf einen aktiv/aktiv Operator Station Server, so kann er mittels der Erfindung bestimmen, welcher der beiden Operator Station Server vorzugsweise gewählt werden soll, nämlich der, der nach einer Zusammenführung der beiden Operator Station Server auch weiterhin aktiv bleibt, weil der den besten Gesundheitsindex aufweist.

Der jeweilige Gesundheitsindex kann bevorzugt von einem computerimplementierten Wartungsdienst des Leitsystems dafür verwendet werden, einen Wartungsbedarf der Operator Station Server festzustellen und eine entsprechende Wartung zu triggern. Mit dem Gesundheitsindex steht ein einfacher, aber effizienter KPI (Key Performance Indicator) zur Verfügung, um weniger zuverlässige Operator Station Server identifizieren zu können. Hiermit ist eine verbesserte Diagnose und vor allem auch vorbeugende Wartung möglich.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: einen zeitlichen Verlauf von Alarmen mit unterschiedlichem Schweregrad;
- FIG 2: einen zeitlichen Verlauf eines anhand der Alarme aus FIG 1 berechneten Gesundheitsindex;
- FIG 3: einen weiteren zeitlichen Verlauf von Alarmen mit unterschiedlichem Schweregrad;
- FIG 4: einen zeitlichen Verlauf eines anhand der Alarme aus FIG 3 berechneten Gesundheitsindex; und
- FIG 5: ein Leitsystem in einer schematischen Darstellung.

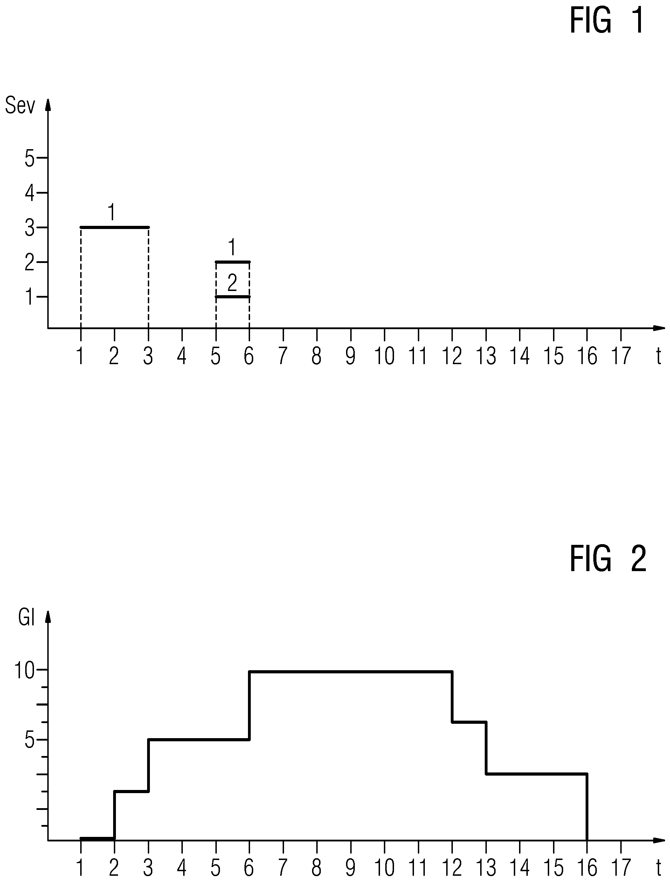

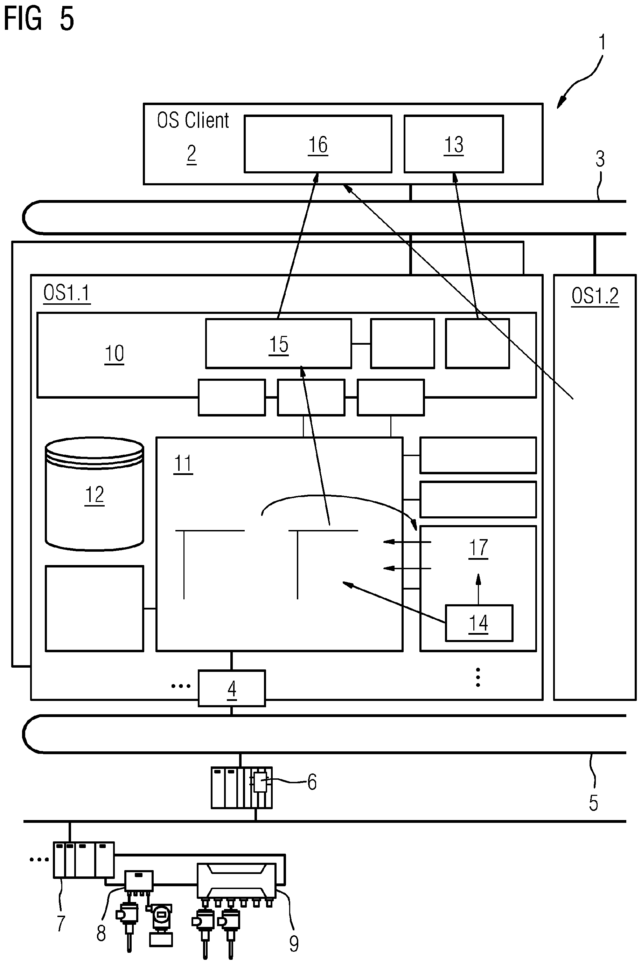

In FIG 1 ist ein zeitlicher Verlauf von Alarmen dargestellt, die von verschiedenen Software-Komponenten eines Operator Station Servers (vgl. FIG 5) erzeugt wurden. Auf der horizontalen Achse ist eine Zeit in beliebigen Einheiten (z.B. 1 Stunde), auf der vertikalen Achse ein Schweregrad (SEV) der jeweiligen Alarme dargestellt. Für eine erste Zeitdauer von t=1 bis t=3 wurde von einer ersten Software-Komponente ein Fehler festgestellt, dem ein Schweregrad von Sev=3 zugeordnet wurde. Entsprechend liegt zwischen t=1 und t=3 ein Alarm mit einem Schweregrad von Sev=3 vor. Für eine zweite Zeitdauer von t=5 bis t=6 liegt ein Alarm mit einem Schweregrad von Sev=2 und zwei Alarme mit einem Schweregrad von Sev=1 vor.

Nach dem Stand der Technik ist der Operator Station Server, auf dem die Alarme gemeldet werden, im Zeitraum t=3 bis t=5 und nach t=6 fehlerfrei und daher für Operator Station Client Anmeldungen geeignet oder auch dafür ausgebildet, in eine aktive Rolle bei einem redundant ausgelegten Operator Station Server Paar zu wechseln. Obgleich der Operator Station Server hochgradig vorbelastet ist, "wirken" seine Alarme "nicht nach". Stünde die Prüfung für eine Wartung an, würde die Diagnose ergeben, dass der Operator Station Server gänzlich in Ordnung ist und keine Reparaturen eingeplant werden müssen. Gerade Alarme, die sich auf wiederkehrende Probleme beziehen ("Wackelkontakte" in der Netzwerkanbindung, Bitkipper in Prozessoren, wärmebedingte Ausfälle von Bausteinen, usw.), können hierbei besonders problematisch werden, da dies ebenfalls zu wiederkehrenden Redundanzumschaltungen der Operator Station Server oder zu Wechseln der Operator Station Clients zu anderen Operator Station Server führen oder zu Ausfällen der Bedienung und Beobachtung führen können.

In FIG 2 ist der Gesundheitsindex (GI) dargestellt, welchen der Operator Station Server aus den ihm zur Verfügung gestellten Alarmen (vgl. FIG 1) berechnet. Ein Gesundheitsindex von GI=0 ist dabei gleichbedeutend mit einer bestmöglichen Gesundheit. Je größer der Gesundheitsindex ist, desto schlechter ist die Gesundheit des Operator Station Servers. Der Operator Station Server fragt immer zu diskreten Zeitpunkten (t=1, t=2, t=3 usw.) mögliche Alarme von den Software-Komponenten ab. Die Zeitspanne als Beobachtungszeitraum wird zu zehn Zeiteinheiten festgelegt.

Zum Zeitpunkt t=1 beginnt der erste Alarm mit dem Schweregrad von Sev=3 und fließt noch nicht in die Berechnung des Gesundheitsindex ein, weshalb dieser einen Wert von GI=0 aufweist. Zum Zeitpunkt t=2 fließt der Alarm in die Berechnung des Gesundheitsindex ein, weshalb sich dessen Wert zu Gl=3 ändert. Der Alarm liegt noch bis zum Zeitpunkt t=3 an, weshalb sich hier der Gesundheitsindex zu Gl=6 ändert. In die Berechnung des Gesundheitsindex Gl fließt demnach nicht nur der Schweregrad, sondern auch die Zeitdauer (hier für zwei Zeiteinheiten) ein, während der ein Alarm anliegt.

Der Gesundheitsindex bleibt zwischen t=3 und t=6 konstant bei einem Wert von Gl=6, weil hier kein weiterer Alarm anliegt und die Zeitspanne von 10 Zeiteinheiten seit dem Aufkommen des ersten Alarms noch nicht verstrichen ist. Zum Zeitpunkt t=6 liegen für eine Zeiteinheit lang drei Alarme an, die summiert einen Schweregrad von Sev=4 aufweisen, weshalb sich der Gesundheitsindex zum Zeitpunkt t=6 von Gl=6 zu GI=10 ändert. Der Gesundheitsindex Gl bleibt nun bis zum Zeitpunkt t=12 konstant auf GI=10, da keine weiteren Alarme mehr aufkommen. Bei t=12 ist die Zeitspanne von 10 Zeiteinheiten seit der ersten Erhöhung des Gesundheitsindex bei t=2 verstrichen, weshalb diese Änderung nun wieder rückgängig gemacht und der Gesundheitsindex um drei Einheiten von Gl=10 auf Gl=7 verringert wird. Zum Zeitpunkt t=13 wird auch der durch den ersten Alarm bedingte zweite Sprung bei t=3 rückgängig gemacht und der Gesundheitsindex von Gl=7 auf Gl=4 geändert. Bei t=16 wird auch der durch die Alarme bei t=6 bedingte Sprung rückgängig gemacht und der Gesundheitsindex von Gl=4 zu GI=0 geändert. Der Operator Station Server weist ab diesem Zeitpunkt t=16 keine negativen Gesundheitsindexbeeinträchtigungen auf.

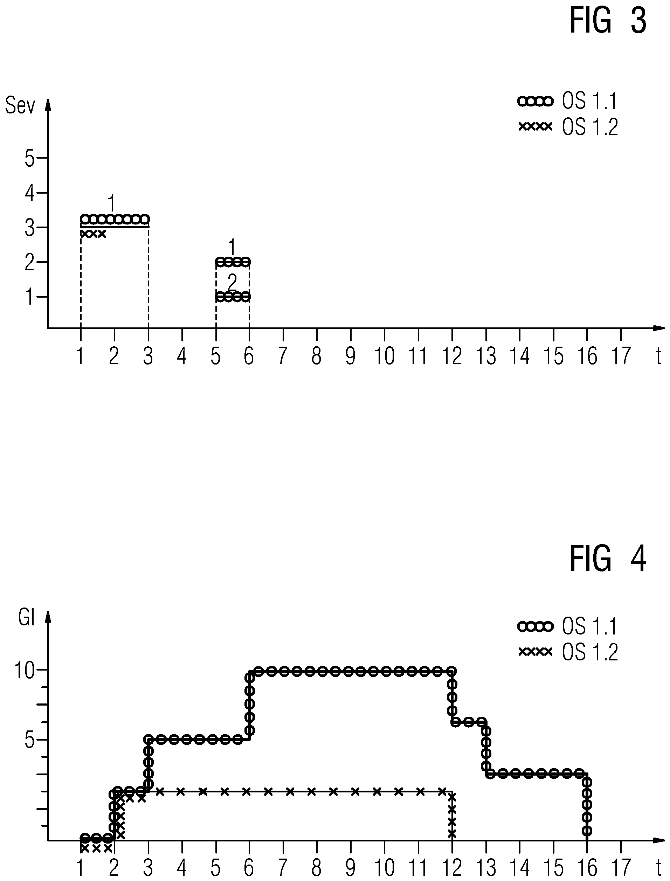

In FIG 3 sind die Schweregrade von aufkommenden Alarmen für zwei Operator Station Server OS 1.1 und OS 1.2 in einer zeitlichen Abfolge dargestellt. Der erste Operator Station Server 1.1 bzw. dessen Alarme entsprechen dabei dem Operator Station Server von FIG 1 und FIG 2. Der zweite Operator Station Server OS 1.2 weist zwischen t=1 und t=2 einen Alarm mit einem Schweregrad von 3 auf. Die sich hieraus ergebenden Gesundheitsindizes Gl sind in FIG 4 dargestellt. Der mit Kreisen gekennzeichnete Verlauf des Gesundheitsindex des ersten Operator Station Servers OS 1.1 entspricht dem Verlauf aus FIG 2. Der Gesundheitsindex des zweiten Operator Station Servers OS 1.2 steigt bei t=2, bedingt durch den ab t=1 angefallenen Alarm, von GI=0 auf GI=3. Auf diesem Wert bleibt der Gesundheitsindex des zweiten Operator Station Servers OS 1.2 bis zum Ablauf der Zeitspanne von zehn Zeiteinheiten, also bis zum Zeitpunkt t=12. Ab hier beträgt der Gesundheitsindex des zweiten Operator Station Servers OS 1.2 wieder GI=0.

Aus diesem Ausführungsbeispiel wird ersichtlich, dass sich der zweite Operator Station Server OS 1.2, bis auf die Zeitdauer zwischen t=2 und t=3, zu jedem Zeitpunkt in einem besseren Gesundheitszustand als der erste Operator Station Server OS 1.1 befindet. Der zweite Operator Station Server OS 1.2 wäre daher für Anmeldungen von Operator Station Clients oder bei der Ausübung einer Masterrolle (aktiven Rolle) bei einem Redundanzbetrieb der beiden Operator Station Server OS 1.1, OS 1.2 zu bevorzugen.

In FIG 5 ist ein Leitsystem 1 für die Bedienung und Beobachtung einer als Prozessanlage ausgebildeten technischen Anlage schematisch dargestellt. Das Leitsystem 1 umfasst einen ersten Operator Station Server OS 1.1, einen zweiten Operator Station Server OS 1.2 und einen Operator Station Client 2. Der erste Operator Station Server OS 1.1, der zweite Operator Station Server OS 1.2 und der Operator Station Client 2 sind über einen Terminalbus 3 miteinander und optional mit nicht dargestellten weiteren Komponenten des Leitsystems 1 wie einem Archivserver oder einem Engineering Station Server verbunden.

Ein Benutzer bzw. Operator kann zum Zwecke des Bedienens und Beobachtens über den Operator Station Client 2 mittels des Terminalbus 3 auf die Operator Station Server OS 1.1, OS 1.2 zugreifen. Analog dazu kann ein Projekteur über einen in FIG 5 nicht dargestellten Engineering Station Client auf den ebenfalsl nicht dargestellten Engineering Station Server zugreifen, um eine Projektierung der Automatisierung für die Prozessanlage zu erstellen. Der Terminalbus 3 kann, ohne sich darauf zu beschränken, beispielsweise als Industrial Ethernet ausgebildet sein.

Der erste Operator Station Server OS 1.1 und der zweite Operator Station Server OS 1.2 sind im Wesentlichen baugleich ausgebildet, weshalb im Folgenden nur auf die Beschreibung des ersten Operator Station Servers OS 1.1 eingegangen wird. Der erste Operator Station Server OS 1.1 weist eine Geräteschnittstelle 4 auf, die mit einem Anlagenbus 5 verbunden ist. Über diese Geräteschnittstelle 4 ist der erste Operator Station Server OS 1.1 mit einem Automatisierungsgerät 6 sowie mit weiteren Komponenten der Prozessanlage wie Peripheriegeräten 7, 8, 9 verbunden und kann mit diesen kommunizieren. Der Anlagenbus 5 kann, ohne sich darauf zu beschränken, beispielsweise als Industrial Ethernet ausgebildet sein.

Auf dem ersten Operator Station Server OS 1.1 sind (unter anderem) ein Visualisierungsdienst 10, ein Prozessabbild 11 und ein Konfigurationsspeicher 12 implementiert. Der in dem ersten Operator Station Server OS 1.1 integrierte Visualisierungsdienst 10 initiiert eine Übertragung von Visualisierungsinformationen an den Operator Station Client 2. Der Operator Station Client 2 ist dazu ausgebildet, eine Visualisierung, d.h. eine grafische Darbietung 13, insbesondere von Anlagenbildern, Messwerteverläufen, Bedienelementen und vergleichbaren Elementen, zum Bedienen und Beobachten der Prozessanlage darzustellen.

In dem Prozessabbild 11 des ersten Operator Station Servers OS 1.1 ist eine Momentaufnahme der (Signal-)Zustände von mit dem ersten Operator Station Server OS 1.1 verbundenen Geräten und/oder Applikationen hinterlegt. Diese werden im vorliegenden Ausführungsbeispiel von dem Automatisierungsgerät 6 an den ersten Operator Station Server OS 1.1 übertragen.

Nach Fertigstellung einer Automatisierung für die Prozessanlage wird diese durch einen Kompilierungsdienst des Engineering Station Servers in ein für das Automatisierungsgerät 6 und den ersten Operator Station Server OS 1.1 verständliches Datenformat gebracht und an die beiden Geräte übertragen. Der für die Bedienung und Beobachtung der Prozessanlage vorgesehene Teil der Automatisierungsdaten wird in dem Konfigurationsspeicher 12 des ersten Operator Station Servers OS 1.1 hinterlegt.

Ein Gesundheitsindexdienst 14 des ersten Operator Station Servers OS 1.1 ermittel gemäß dem anhand der Figuren 1-4 erläuterten Verfahren den Gesundheitsindex des ersten Operator Station Server OS 1.1. Berechnungsgrundlage hierfür sind die Alarme (System Messages) der einzelnen Software-Komponenten des erten Operator Station Servers OS 1.1 mit ihren jeweiligen Schweregraden und Zeitdauern. Der für die Operator Station Server berechneten Gesundheitsindex wird im Prozessabbild 11 hinterlegt. Ein Diagnosedienst 15 es Visualisierungsdienstes 10 greift auf den Gesundheitsindex aus dem Prozessabbild 11 zu und stellt diesen einem entsprechenden Client-Diagnosedienst 16 des Operator Station Clients 2 zur Verfügung. Weiterhin wird der Gesundheitsindex einem Redundanzdienst 17 zur Verfügung gestellt, welcher diesen für die Bestimmung der aktiven oder passiven Rolle der redundant ausgelegten Operator Station Server OS 1.1, OS 1.2 verwendet.

Der Gesundheitsindex kann noch weiteren Komponenten des Leitsystems 1 wie einem Wartungsdienst zur Verfügung gestellt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Leitsystem
- 2: Operator Station Client
- 3: Terminalbus
- 4: Geräteschnittstelle
- 5: Anlagenbus
- 6: Automatisierungsgerät
- 7: Peripheriegerät
- 8: Peripheriegerät
- 9: Peripheriegerät
- 10: Visualisierungsdienst
- 11: Prozessabbild
- 12: Konfigurationsspeicher
- 13: Visualisierung
- 14: Gesundheitsindexdienst
- 15: Diagnosedienst
- 16: Client- Diagnosedienst
- 17: Redundanzdienst
- OS 1.1: Erster Operator Station Server
- OS 1.2: Zweiter Operator Station Server

## Patentansprüche

1. Operator Station Server (OS 1.1, OS 1.2) für ein Leitsystem (1) einer technischen Anlage, insbesondere Fertigungs- oder Prozessanlage, der für eine Bedienung und Beobachtung der technischen Anlage ausgebildet ist, auf dem wenigstens eine Software-Komponente implementiert ist, wobei die wenigstens eine Software-Komponente dazu ausgebildet ist, für eine Zeitdauer eines in der Software-Komponente auftretenden Fehlers einen Alarm mit einem bestimmten Schweregrad zu erzeugen,
**dadurch gekennzeichnet, dass**
der Operator Station Server (OS 1.1, OS 1.2) dazu ausgebildet ist, in Bezug auf sich selbst einen Gesundheitsindex zu berechnen, der von der Zeitdauer und dem Schweregrad des erzeugten Alarms abhängt, und diesen Gesundheitsindex an mit dem Operator Station Server (OS 1.1, OS 1.2) in Verbindung stehende Komponenten des Leitsystems (1) zu übermitteln.

2. Operator Station Server (OS 1.1, OS 1.2) nach Anspruch 1, auf dem wenigstens eine weitere Software-Komponente implementiert ist, wobei die wenigstens eine weitere Software-Komponente dazu ausgebildet ist, für eine Zeitdauer eines in der wenigstens einen weiteren Software-Komponente auftretenden Fehlers einen Alarm mit einem bestimmten Schweregrad zu erzeugen, wobei der Operator Station Server (OS 1.1, OS 1.2) dazu ausgebildet ist, in Bezug auf sich selbst einen Gesundheitsindex zu berechnen, der von der Zeitdauer und dem Schweregrad der durch die Software-Komponente und die wenigstens eine weitere Software-Komponente erzeugten Alarme abhängt, und wobei der Operator Station Server (OS 1.1, OS 1.2) dazu ausgebildet ist, diesen Gesundheitsindex an mit dem Operator Station Server (OS 1.1, OS 1.2) in Verbindung stehende Komponenten des Leitsystems (1) zu übermitteln.

3. Operator Station Server (OS 1.1, OS 1.2) nach Anspruch 2, der dazu ausgebildet ist, die jeweiligen Schweregrade der Alarme zu summieren.

4. Operator Station Server(OS 1.1, OS 1.2) nach einem der vorangegangenen Ansprüche, der dazu ausgebildet ist, den von der Software-Komponente erzeugten Alarm oder die von den Software-Komponenten erzeugten Alarme jeweils nur für eine bestimmte Zeitspanne für die Berechnung des Gesundheitsindex zu berücksichtigen.

5. Operator Station Server (OS 1.1, OS 1.2) nach Anspruch 4, bei dem die bestimmte Zeitspanne eine Stunde, 12 Stunden oder 24 Stunden beträgt.

6. Leitsystem (1) für eine technische Anlage, insbesondere Fertigungs- oder Prozessanlage, welches einen ersten Operator Station Server (OS 1.1, OS 1.2) aufweist, der gemäß einem der Ansprüche 1 bis 5 ausgebildet ist.

7. Leitsystem (1) nach Anspruch 6, welches einen zweiten Operator Station Server (OS 1.1, OS 1.2) aufweist, der gemäß einem der Ansprüche 1 bis 5 ausgebildet ist.

8. Leitsystem (1) nach Anspruch 7, bei dem die beiden Operator Station Server (OS 1.1, OS 1.2) auf redundante Art und Weise für die Bedienung und Beobachtung der technischen Anlage ausgebildet sind, wobei die beiden Operator Station Server (OS 1.1, OS 1.2) dazu ausgebildet sind, durch wiederholte Vergleiche ihres jeweiligen Gesundheitsindex festzulegen, welcher Operator Station Server (OS 1.1, OS 1.2) aktiv und welcher Operator Station Server (OS 1.1, OS 1.2) passiv sein soll.

9. Verfahren zum Betrieb einer technischen Anlage, insbesondere Fertigungs- oder Prozessanlage, mit einem Leitsystem (1) nach einem der Ansprüche 6 bis 8.

10. Verfahren zum Betrieb einer technischen Anlage, insbesondere Fertigungs- oder Prozessanlage, mit einem Leitsystem (1) nach einem der Ansprüche 7 oder 8, bei dem ein Operator Station Client (2), der sich an einem der beiden Operator Station Server (OS 1.1, OS 1.2) anmelden möchte, von beiden Operator Station Servern (OS 1.1, OS 1.2) den jeweiligen Gesundheitsindex abfragt und auf Basis eines Vergleichs der beiden Gesundheitsindex einen der beiden Operator Station Server (OS 1.1, OS 1.2) für die Anmeldung auswählt.

11. Verfahren nach Anspruch 9 oder 10, bei dem der jeweilige Gesundheitsindex von einem computerimplementierten Wartungsdienst des Leitsystems (1) dafür verwendet wird, einen Wartungsbedarf der Operator Station Server (OS 1.1, OS 1.2) festzustellen und eine entsprechende Wartung zu triggern.
